# EUROPEAN PATENT SPECIFICATION

(11) **EP 4 534 957 B1**
(45) Date of publication and mention of the grant of the patent: **02.12.2026**
(21) Application number: 23201113.0
(22) Date of filing: 02.10.2023
(51) Int. Cl.: G01C 21/34, G05D 1/226, G05D 1/225, G05D 1/222, G05D 1/698

(54) **A CELLULAR NETWORK FOR AN EFFICIENT AND RELIABLE REMOTE OPERATION OF A VEHICLE FLEET**
ZELLULARES NETZWERK FÜR EINEN EFFIZIENTEN UND ZUVERLÄSSIGEN FERNBETRIEB EINER FAHRZEUGFLOTTE
RÉSEAU CELLULAIRE POUR UN FONCTIONNEMENT À DISTANCE EFFICACE ET FIABLE D'UNE FLOTTE DE VÉHICULES

(43) Date of publication of application: 09.04.2025
(73) Proprietor: Deutsche Telekom AG, 53113 Bonn (DE)
(72) Inventor: GEITZ, Marc, 58089 Hagen (DE); SCHNIEDERS, Dominik, 52078 Aachen (DE)
(74) Representative: RDL Patentanwälte PartG mbB

(56) References cited:
- US-A1- 2019 383 624
- US-A1- 2022 228 874

## Description

The invention relates to a method for operating a cellular network, wherein a teleoperation server remotely operates a vehicle fleet on a road network via a wireless connection provided by a cellular network and a network node of the cellular network receives a route request from the teleoperation server, the received route request comprising a starting position of a vehicle of the vehicle fleet, a target location to be reached by the vehicle, a teleoperation route connecting the target location to the starting position and a travel time of the vehicle. The invention further relates to a network node for a cellular network and a computer program product.

The vehicle fleet, herein, shall be understood as a plurality of vehicles provided for being ordered and individually used by a plurality of customers on a predetermined road network, e.g., a road network of a town. The road network comprises a plurality of roads connected to each other at nodes of the road network.

A customer usually orders a vehicle of the vehicle fleet indicating a starting position within the road network and, possibly, a pickup time, where and if applicable when the customer intends to start using the vehicle. Traditionally, a physical driver, i.e., a person, e.g., a taxi driver drives the ordered vehicle to arrive at the indicated starting position at the indicated pickup time, allows the customer to enter the vehicle, drives the vehicle to a target location within the road network indicated by the customer and allows the customer to exit the vehicle after having reached the target location.

US 2022/0228874 A1 discloses a method for operating a cellular network wherein a control node of the cellular network determines a route for an autonomous vehicle, the determined route ensuring the cellular network to provide a quality of service, QoS, requested by the vehicle while the vehicle travels along the route.

US 2019/0383624 A1 discloses a method for teleoperating a vehicle fleet, wherein a teleoperation route of each vehicle comprises a plurality of route segments. Each route segment is assigned a utility score corresponding to a network performance on the route segment, the respective network performances being provided by a network performance database.

Having each vehicle of the vehicle fleet driven by a physical driver is very expensive.

The vehicle fleet may also be understood as a fleet of mobile robots, mobile cranes, mobile containers to be remotely operated on a path network of, e.g., a factory or a port.

As cellular networks become more powerful, vehicles are going to be driven, i.e., operated remotely without a physical driver arranged in the vehicle. Instead, a remote driver receives real-time data from the vehicle and transmits commands to the vehicle via wireless connections provided by a cellular network, the received real-time data comprising video and audio data captured by sensors of the vehicle and the transmitted commands causing the vehicle to travel on a road network.

Accordingly, a plurality of physical drivers may be replaced by few central operators, each central operator using a teleoperation server configured for remotely operating the vehicles of the vehicle fleet. The teleoperation server, on the one hand, allows for a more economic operation of the vehicle fleet. On the other hand, an efficiency of the vehicle fleet may be increased. A customer drives the ordered vehicle by himself/herself from the starting position to the target location while the central operator remotely operates the ordered vehicle for moving it in due time to the starting position indicated by the customer.

However, an availability and/or a coverage of the cellular network usually is neither spatially homogeneous over the road network nor constant over time at a road or a node of the road network. As a result, parts of the road network may at least temporarily lack a sufficient provision of wireless connections which hinders or at least adversely affects remote operation of the vehicle fleet.

It is, therefore, an object of the invention to suggest a method for operating a cellular network which allows for an efficient and reliable remote operation of a vehicle fleet on a road network. Further objects of the invention are to provide a network node for a cellular network and a computer program product.

An aspect of the invention is a method for operating a cellular network, wherein a teleoperation server remotely operates a vehicle fleet on a road network via wireless connections provided by a cellular network and a network node of the cellular network receives a route request from the teleoperation server, the received route request comprising a starting position of a vehicle of the vehicle fleet, a target location to be reached by the vehicle, a teleoperation route connecting the target location to the starting position and a travel time of the vehicle. The road network may be a road network of a town and comprises a plurality of nodes and roads connecting the nodes. The vehicle fleet comprises a plurality of vehicles. Each vehicle is configured to be remotely operated and to travel along the roads of the road network. The teleoperation route comprises a sequence of roads of the road network to be traveled along by the vehicle sequentially.

The teleoperation server is connected to the cellular network and may be used by an operator of the vehicle fleet, i.e., a tele drive operator or tele operator, for remotely operating the vehicle fleet. The network node forms part of the cellular network and is provided by an operator of the cellular network, i.e., a mobile network operator, MNO. The cellular network shall be understood as one cellular network out of a plurality of different cellular networks, each cellular network at least partially covering the road network. The different cellular networks may overlap at least partially.

The route request is a data message indicating the starting position, the target location, the teleoperation route and the travel time. The travel time comprises a pickup time and a travel duration and specifies a future time interval.

According to the invention, the network node determines an optimal teleoperation route allowing for a safe remote operation of the vehicle from the requested starting position to the requested target location and transmits a route suggestion to the teleoperation server when the cellular network does not allow for a safe remote operation of the vehicle along the requested teleoperation route during the requested travel time, the transmitted route suggestion comprising the optimal teleoperation route. The network node checks an availability of wireless connections along the requested teleoperation route during the requested travel time. In case the availability along the requested teleoperation route is insufficient for a safe remote operation of the vehicle the teleoperation server determines the optimal teleoperation route to be a route covered by the cellular network sufficiently for a safe remote operation of the vehicle.

It is noted that the remotely operated vehicle traveling on the teleoperation node has to slow down or even stop when the wireless connection is insufficient for a remote operation. The vehicle may even be damaged from a collision caused by the insufficient wireless connection. The inventive method allows for an efficient and reliable operation of the vehicle fleet by avoiding or at least reducing said risks.

Still according to the invention, the network node determines a plurality of intermediate teleoperation routes in between the requested teleoperation route and the determined optimal teleoperation route by applying random variations generated by a Monte Carlo algorithm to the requested teleoperation route or the determined optimal teleoperation route, the transmitted route suggestion comprising the determined intermediate teleoperation routes. Each intermediate teleoperation route is determined in order to provide an availability of wireless connections sufficient for a safe remote operation of the vehicle. For instance, the intermediate teleoperation routes may be determined by means of a greedy algorithm. The intermediate teleoperation routes may have different lengths and/or different qualities of available wireless connections. The plurality of intermediate teleoperation nodes allows the teleoperation server, more specifically the operator using the teleoperation server, for a choice.

The network node may receive a route decision from the teleoperation server, the route decision comprising a suggested teleoperation route, store the suggested teleoperation route and cause the cellular network to reserve corresponding spectral resources of radio cells passed through by the suggested teleoperation route. Each stored teleoperation route may be understood to be a teleoperation route approved by the network node. The spectral resources shall be understood to be a plurality of resource blocks, RB, for respective time intervals. The spectral resources are reserved, i.e. blocked for respective travel times of the vehicle within the radio cells, i.e., the total travel duration is divided in subsequent partial travel durations each partial travel duration associated with a radio cell. Of course, blocked spectral resources not used for remotely operating the vehicle may readily be used otherwise. The number of resource blocks to be reserved depends on a position of the vehicle in the radio cell, particularly relative to a position of a base transceiver station generating the radio cell. For instance, remotely operating the vehicle at a greater distance from the base transceiver station, gernerally requires more resource blocks than remotely operating the vehicle at a smaller distance therefrom.

In an embodiment, the network node stores the requested teleoperation route, causes the cellular network to reserve corresponding spectral resources of radio cells passed through by the requested teleoperation route and transmits a route confirmation to the teleoperation server when the cellular network allows for a safe remote operation of the vehicle along the requested teleoperation route during the requested travel time. The network node checks an availability of wireless connections along the requested teleoperation route during the requested travel time. In case the availability along the requested teleoperation route is sufficient for a safe remote operation of the vehicle the teleoperation server is not required to determine an optimal teleoperation route. Of course, the teleoperation server may still determine the optimal teleoperation route.

Determining the optimal teleoperation route may also comprise verifying the requested teleoperation route. The network node may additionally determine a teleoperation route without taking into account an availability of wireless connections along the teleoperation route. Verifying the requested teleoperation route comprises comparing the teleoperation route with the requested teleoperation route wherein the verification is successful when the teleoperation route and the requested teleoperation route at least substantially coincide, i.e., differ slightly at most.

Determining the optimal teleoperation route preferably comprises assigning weights to sections of roads of the road network and applying a weighted shortest path algorithm to the road network, the weighted shortest path algorithm evaluating respective costs of routes connecting the requested target location to the requested starting position by summing up weights assigned to sections of roads of the route. The higher is the availability of wireless connections along a section of a road, the lower is the weight assigned to the section. In contrast, the lower is the availability of wireless connections along a section of the road, the higher is the weight assigned to the section. The cost of a route equals a sum of weights assigned to sections of the route. The optimal teleoperation route is determined to be both short and cheap.

The weights may be assigned dependent on attributes of nodes and/or roads of the road network, the attributes specifying the road network and the cellular network. The nodes and roads of the road network correspond to nodes and edges of a mathematical graph. The nodes may be crossings, roundabouts, junctions, significant places alongside a road and the like.

Exemplarily, the attributes specifying the cellular network may comprise a radio coverage along a road section, a maximum bit rate along a road section, a minimum guaranteed bitrate along a road section and/or a guaranteed maximum latency along a road section. Said attributes specify a quality of the cellular network along the road section which is readily accessible for the network node as part of the cellular network. In case there is a plurality of overlapping different cellular networks along the road section attributes of the respective best cellular network are relevant for the determination. In case the attributes of the cellular network vary along the road section the respective worst attribute value is relevant for the determination. The overlapping different cellular network may even cooperate in determining the optimal teleoperation route.

In an embodiment, the attributes specifying the road network may comprise a location of a node, a type of a node, a length of a road, a category of a road, a maximum velocity along a road section, a current traffic situation along a road section, an air quality along a road section, a number of lanes of a road section, a direction of a road. Said attributes specify a quality of the traffic along the road section. Categories of the road comprise a freeway, a federal highway, a highway, an urban road, a residential street and the like. Current traffic situations comprise a traffic jam, a traffic congestion, a lane closure and the like. Directions of the road comprise one-way and two-way.

It is noted that some attributes usually vary over time. Of course, values of these attributes during the requested travel time are relevant for determining teleoperation routes.

In a favorable embodiment, the attributes specifying the cellular network are predicted by an artificial neural network and/or by means of a time series of historic data. For instance, a load of the cellular network may vary on a regular and, hence, predictable basis, e.g., showing a daily rhythm and/or a weekly rhythm. The artificial neural network is configured for recognizing time patterns of the attributes. Time patterns may be alternatively or additionally recognized from historic data by applying traditional pattern recognition algorithms to historic data, i.e., by time series analysis.

The network node may determine a key figure for each determined teleoperation route and assigns the determined key figure to the determined teleoperation route, the transmitted route suggestion comprising the assigned key figure. The key figure facilitates choosing between different determined teleoperation routes, i.e., the optimal teleoperation route and each intermediate teleoperation route. Of course, a plurality of different key figures may be determined by the network node.

Exemplarily, the network node may determine a difference of a travel time along the determined teleoperation route from the requested travel time, a difference of a route length of the determined teleoperation route from a route length of the requested teleoperation route and/or a probability of an undisturbed travel along the determined teleoperation route as the key figure. In other words, the key figure indicates an amount of how much longer it takes to travel along the determined teleoperation route, how much longer a travel distance along the determined teleoperation route is from the starting position to the target location and/or how high the risk of a disturbance is along the determined teleoperation route.

The probability of a disturbance may be calculated assuming a Gaussian distribution for the number IsRB of resource blocks available along a road of the road network. In case the number MinRB of resource blocks required for an undisturbed travel is higher than IsRB, i.e., MinRB > IsRB, a disturbance probability is 100%. Otherwise, the disturbance probability is lower than 100%. MinRB depends on current states of the road network and the traveling vehicle, respectively, while IsRB depends on a current availability of the cellular network.

For instance, (IsRB-MinRB)/MinRB = 1σ results in a disturbance probability of 68%, (IsRB-MinRB)MinRB = 2σ results in a disturbance probability of 5% and (IsRB-MinRB)/MinRB = 3σ results in a disturbance probability lower than 1% wherein σ is the so-called standard deviation of the Gaussian distribution.

Preferably, a teleoperation application executed by the teleoperation server and each vehicle of the vehicle fleet is caused by the cellular network to automatically adapt a data rate to a current bit rate of the wireless connection and/or the teleoperation server is preferably configured as an edge server. The teleoperation application is a distributed real-time or near-real-time application. The teleoperation application receives control signals related to the current bit rate from the cellular network and adapts the data rate dependent on the received control signals. Thus, the teleoperation application automatically and immediately adapts to a current availability of the cellular network in order to minimize a latency and/or a jitter of the wireless connection. The jitter is a variation of the latency over time. A high latency and/or a high jitter is caused by permanently and/or temporarily overloaded network queues.

The adaptability of the teleoperation application allows for ignoring any attribute related to the latency. For instance, the teleoperation application and the cellular network may implement a Low Latency Low Loss Scalable Throughput, L4S, protocol for interaction.

The edge comprises a part of the cellular network within few hops from, i.e., a logical neighborhood of relevant base transceiver stations, BTS, of the cellular network. Arranging the teleoperation server close to a relevant base transceiver station significantly reduces a round-trip-time, RTT, of a communication between the teleoperation server and the vehicles of the vehicle fleet.

In an embodiment, the requested teleoperation route is determined by the teleoperation server and/or by minimizing a length of the route. As the teleoperation server has no access to relevant data concerning the cellular network, a traditional shortest path algorithm may be applied by the teleoperation server for determining the teleoperation route to be requested.

Of course, the received route request may comprise respective starting positions, target locations, routes and travel times of a plurality of vehicles. In other words, the teleoperation server is configured for simultaneously operate a plurality of vehicles and, particularly, the vehicle fleet as a whole.

Another aspect of the invention is a network node for a cellular network. The network node is a computing device to be immediately connected to the cellular network. The network node may be an existing network node or an additional network node.

According to the invention, the network node is configured for carrying out a method according to an embodiment of the invention together with the teleoperation server remotely operating a vehicle fleet on a road network via wireless connections provided by the cellular network. The network node allows for a teleoperation server of a teleoperation operator an efficient and reliable remote operation of a vehicle fleet on a road network.

A third aspect of the invention is a computer program product, comprising a digital storage medium storing a program code. The digital storage medium may be configured as a CD (Compact Disc), a DVD (Digital Versatile Disk), a USB (Universal Serial Bus) stick, a hard drive, a RAM (Random Access Memory) chip, a cloud storage and the like.

According to the invention, the program code causes a computing device to carry out a method according to an embodiment of the invention together with the teleoperation server as the network node when being executed by a processor of the computing device. In other words, the computer program product enables the computing device to participate in the inventive method as the network node and to allow for a teleoperation server an efficient and reliable remote operation of a vehicle fleet on a road network.

It is an essential advantage of the inventive method that an efficient and reliable remote operation of a vehicle fleet is ensured. Apart from that, mobile network operators may open a new business field and help in developing an alternative traffic concept for towns and reducing an individual traffic in cities.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a cellular network with a network node according to an embodiment of the invention for a cellular network;
- Fig. 2: schematically shows a flow chart of a method according to an embodiment of the invention for operating the cellular network shown in fig. 1.

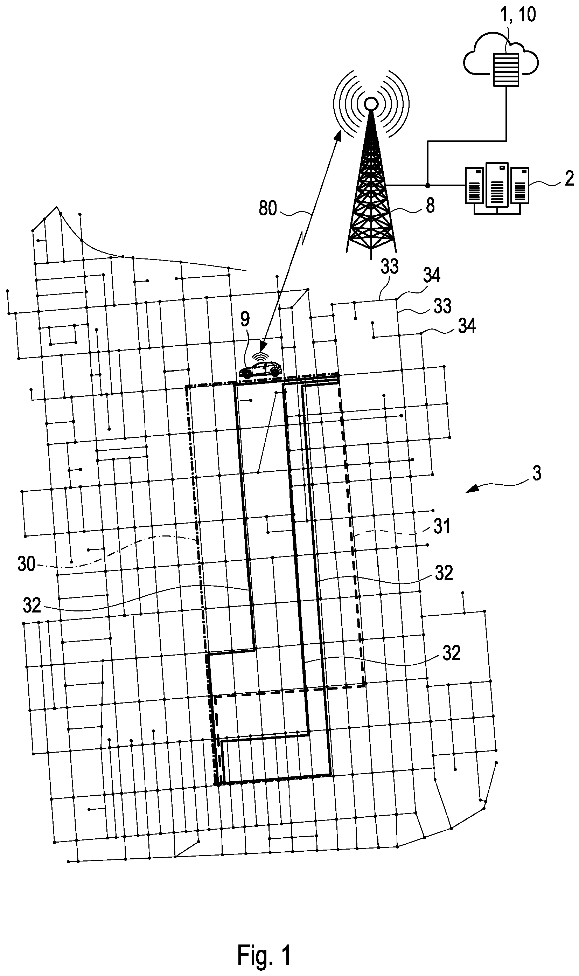

Fig. 1 schematically shows a cellular network 8 with a network node 1 according to an embodiment of the invention. The cellular network 8 is illustrated simply as an antenna of a base transceiver station, BTS, of the cellular network 8. A teleoperation server 2 is connected to the cellular network 8.

The teleoperation server 2 is configured for remotely operating a vehicle fleet on a road network 3 via wireless connections 80 provided by the cellular network 8. Furthermore, the teleoperation server 2 is preferably configured as an edge server.

For sake of simplicity, a single vehicle 9 of the vehicle fleet connected to the cellular network 8 via a single wireless connection 80 is illustrated. The road network 3 comprises a plurality of nodes 34 and a plurality of roads 33 each road 33 connecting to adjacent nodes 34. Exemplary teleoperation routes 30, 31, 32 for the vehicle 9 are also illustrated.

The network node 1 is suitable for the cellular network 8 and may comprise an artificial neural network 10. The network node 1 is configured for carrying out a method according to an embodiment of the invention together with the teleoperation server 2 remotely operating the vehicle fleet on the road network 3 via wireless connections 80 provided by the cellular network 8.

The network node 1 may be configured as a computing device implemented by means of a computer program product. The computer program product comprises a digital storage medium storing a program code. The program code causes the computing device to carry out the inventive method together with the teleoperation server 2 as the network node 1 when being executed by a processor of the computing device. The inventive method is described in detail below.

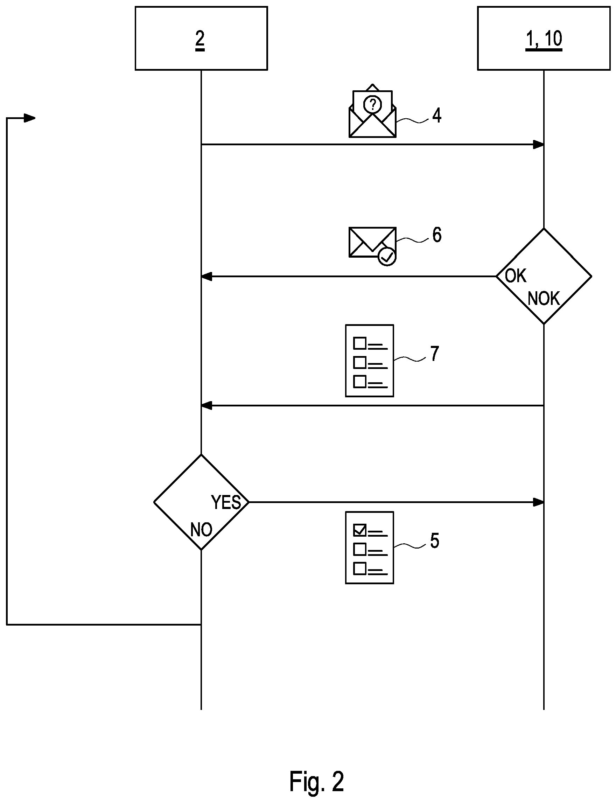

Fig. 2 schematically shows a flow chart of a method according to an embodiment of the invention for operating the cellular network 8 shown in fig. 1.

The teleoperation server 2 remotely operates a vehicle fleet on the road network 3 via wireless connections 80 provided by the cellular network 8.

The network node 1 of the cellular network 8 receives a route request 4 from the teleoperation server 2. The received route request 4 comprises a starting position of a vehicle 9 of the vehicle fleet, a target location to be reached by the vehicle 9, a teleoperation route 30 connecting the target location to the starting position and a travel time of the vehicle 9.

The requested teleoperation route 30 may be determined by the teleoperation server 2. The requested teleoperation route 30 may particularly be determined by minimizing a length of the route. The received route request 4 usually comprises respective starting positions, target locations, routes and travel times of a plurality of vehicles 9.

A teleoperation application executed by the teleoperation server 2 and each vehicle 9 of the vehicle fleet may be caused to automatically adapt a data rate to a current bit rate of the wireless connection 80 by the cellular network 8.

When the cellular network 8 does not allow for a safe remote operation of the vehicle 9 along the requested teleoperation route 30 during the requested travel time, the network node 1 determines an optimal teleoperation route 31 allowing for a safe remote operation of the vehicle 9 from the requested starting position to the requested target location and transmits a route suggestion 7 to the teleoperation server 2. The transmitted route suggestion 7 comprises the optimal teleoperation route 31.

The network node 1 determines a plurality of intermediate teleoperation routes 32 in between the requested teleoperation route 30 and the determined optimal teleoperation route 31 by applying random variations generated by a Monte Carlo algorithm to the requested teleoperation route 30 or the determined optimal teleoperation route 31. The transmitted route suggestion 7 comprises the determined intermediate teleoperation routes 32.

The network node 1 preferably receives a route decision 5 from the teleoperation server 2. The route decision 5 comprises a suggested teleoperation route 31, 32, stores the suggested teleoperation route 31, 32 and causes the cellular network 8 to reserve corresponding spectral resources of radio cells passed through by the suggested teleoperation route 31, 32.

When the cellular network 8 allows for a safe remote operation of the vehicle 9 along the requested teleoperation route 30 during the requested travel time, the network node 1 may store the requested teleoperation route 30, cause the cellular network 8 to reserve corresponding spectral resources of radio cells passed through by the requested teleoperation route 30 and transmit a route confirmation 6 to the teleoperation server 2.

Determining the optimal teleoperation route 31 preferably comprises assigning weights to sections of roads 33 of the road network 3 and applying a weighted shortest path algorithm to the road network 3. The weighted shortest path algorithm evaluates respective costs of routes connecting the requested target location to the requested starting position by summing up weights assigned to sections of roads 33 of the route. Determining the optimal teleoperation route 31 may also comprise verifying the requested teleoperation route 30.

The weights may be assigned dependent on attributes of the nodes 34 and/or roads 33 of the road network 3. The attributes specify both the road network 3 and the cellular network 8.

The attributes specifying the cellular network 8 exemplarily comprise a radio coverage along a road 33 section, a minimum guaranteed bitrate along a road 33 section, a guaranteed maximum latency along a road 33 section and/or a maximum bit rate along a road 33 section. The attributes specifying the cellular network 8 may be predicted by an artificial neural network 10 and/or by means of a time series of historic data.

The attributes specifying the road network 3 exemplarily comprise a location of a node 34, a type of a node 34, a length of a road 33, a category of a road 33, a maximum velocity along a road 33 section, a current traffic situation along a road 33 section, an air quality along a road 33 section, a number of lanes of a road 33 section, a direction of a road 33.

The network node 1 favorably determines a key figure for each determined teleoperation route 31, 32 and assigns the determined key figure to the determined teleoperation route 31, 32. The transmitted route suggestion 7 comprises each assigned key figure.

The network node 1 may determine a difference of a travel time along the determined teleoperation route 31, 32 from the requested travel time, a difference of a route length of the determined teleoperation route 31, 32 from a route length of the requested teleoperation route 30 and/or a probability of an undisturbed travel along the determined teleoperation route 31, 32 as the key figure.

### Reference Numerals

- 1: network node
- 10: artificial neural network
- 2: teleoperation server
- 3: road network
- 30: requested teleoperation route
- 31: optimal teleoperation route
- 32: intermediate teleoperation route
- 33: road
- 34: node
- 4: route request
- 5: route decision
- 6: route confirmation
- 7: route suggestion
- 8: cellular network
- 80: wireless connection
- 9: vehicle

## Claims

1. A method for operating a cellular network (8), wherein
- a teleoperation server (2) remotely operates a vehicle fleet on a road network (3) via wireless connections (80) provided by a cellular network (8);
- a network node (1) of the cellular network (8) receives a route request (4) from the teleoperation server (2), the received route request (4) comprising a starting position of a vehicle (9) of the vehicle fleet, a target location to be reached by the vehicle (9), a teleoperation route (30) connecting the target location to the starting position and a travel time of the vehicle (9);
- when the cellular network (8) does not allow for a safe remote operation of the vehicle (9) along the teleoperation route (30) during the travel time respectively comprised by the route request (4),
the network node (1) determines an optimal teleoperation route (31) allowing for a safe remote operation of the vehicle (9) from the starting position to the target location respectively comprised by the route request, and transmits a route suggestion (7) to the teleoperation server (2), the transmitted route suggestion (7) comprising the optimal teleoperation route (31) and a plurality of determined intermediate teleoperation routes (32) determined by the network node (1) in between the teleoperation route (30) comprised by the route request (4) and the determined optimal teleoperation route (31) by applying random variations generated by a Monte Carlo algorithm to the teleoperation route (30) comprised by the route request (4) or the determined optimal teleoperation route (31).

2. The method according to claim 1, wherein the network node (1) receives a route decision (5) from the teleoperation server (2), the route decision (5) comprising a suggested teleoperation route (31, 32), stores the suggested teleoperation route (31, 32) and causes the cellular network (8) to reserve corresponding spectral resources of radio cells passed through by the suggested teleoperation route (31, 32).

3. The method according to claim 1 or 2, wherein the network node (1) stores the teleoperation route (30) comprised by the route request (4), causes the cellular network (8) to reserve corresponding spectral resources of radio cells passed through by the teleoperation route (30) comprised by the route request (4) and transmits a route confirmation (6) to the teleoperation server (2) when the cellular network (8) allows for a safe remote operation of the vehicle (9) along the teleoperation route during the travel time respectively comprised by the route request (4).

4. The method according to one of claims 1 to 3, wherein determining the optimal teleoperation route (31) comprises assigning weights to sections of roads (33) of the road network (3) and applying a weighted shortest path algorithm to the road network (3), the weighted shortest path algorithm evaluating respective costs of routes connecting the target location to the starting position respectively comprised by the route request, by summing up weights assigned to sections of roads (33) of the route, and/or verifying the teleoperation route (30) comprised by the route request (4), the verifying comprising a teleoperation route being determined without taking into account an availability of wireless connections along the teleoperation route and the determined teleoperation route being compared with the teleoperation route (30) comprised by the route request (4) wherein the verification is successful when the teleoperation route and the teleoperation route comprised by the route request (4) at least substantially coincide.

5. The method according to claim 4, wherein the weights are assigned dependent on attributes of nodes and/or edges of a mathematical graph representing the road network (3), the attributes specifying the road network (3) and the cellular network (8).

6. The method according to claim 5, wherein the attributes specifying the cellular network (8) comprise a radio coverage along a road (33) section, a maximum bit rate along a road (33) section, a minimum guaranteed bitrate along a road (33) section and/or a guaranteed maximum latency along a road (33) section and/or wherein the attributes specifying the road network (3) comprise a location of a node (34), a type of a node (34), a length of a road (33), a category of a road (33), a maximum velocity along a road (33) section, a current traffic situation along a road (33) section, an air quality along a road (33) section, a number of lanes of a road (33) section, a direction of a road (33).

7. The method according to one of claims 5 or 6, wherein the attributes specifying the cellular network (8) are predicted by an artificial neural network (10) and/or by means of a time series of historic data.

8. The method according to one of claims 1 to 7, wherein the network node (1) determines a key figure for each determined teleoperation route (31, 32) and assigns the determined key figure to the determined teleoperation route (31, 32), the transmitted route suggestion (7) comprising the assigned key figure, a difference of a travel time along the determined teleoperation route (31, 32) from the travel time comprised by the route request (4), a difference of a route length of the determined teleoperation route (31, 32) from a route length of the teleoperation route (30) comprised by the route request (4) and/or a probability of an undisturbed travel along the determined teleoperation route (31, 32) being determined as the key figure.

9. The method according to one of claims 1 to 8, wherein a teleoperation application executed by the teleoperation server (2) and each vehicle (9) of the vehicle fleet is caused by the cellular network (8) to automatically adapt a data rate to a current bit rate of the wireless connection (80) and/or the teleoperation server (2) is configured as an edge server.

10. The method according to one of claims 1 to 9, wherein the teleoperation route (30) comprised by the route request (4) is determined by the teleoperation server (2) and/or by minimizing a length of the route.

11. The method according to one of claims 1 to 10, wherein the received route request (4) comprises respective starting positions, target locations, routes and travel times of a plurality of vehicles (9).

12. A system comprising a teleoperation server (2) and a network node (1) for a cellular network (8), configured for carrying out a method according to one of claims 1 to 11, the teleoperation server (2) remotely operating a vehicle fleet on a road network (3) via wireless connections (80) provided by the cellular network (8).

## Patentansprüche

1. Verfahren zum Betreiben eines zellularen Netzwerks (8), wobei
- ein Telebetriebsserver (2) eine Fahrzeugflotte auf einem Straßennetz (3) über drahtlose Verbindungen (80), die von einem zellularen Netzwerk (8) bereitgestellt werden, aus der Ferne betreibt;
- ein Netzwerkknoten (1) des zellularen Netzwerks (8) eine Routenanfrage (4) vom Telebetriebsserver (2) empfängt, wobei die empfangene Routenanfrage (4) eine Startposition eines Fahrzeugs (9) der Fahrzeugflotte, einen vom Fahrzeug (9) zu erreichenden Zielort, eine den Zielort mit der Startposition verbindende Telebetriebsroute (30) sowie eine Fahrzeit des Fahrzeugs (9) umfasst;
- wenn das zellulare Netzwerk (8) einen sicheren Fernbetrieb des Fahrzeugs (9) entlang der Telebetriebsroute (30) während der Fahrzeit, die jeweils von der Routenanfrage (4) umfasst sind, nicht ermöglicht, der Netzwerkknoten (1) eine optimale Telebetriebsroute (31) bestimmt, die einen sicheren Fernbetrieb des Fahrzeugs (9) von der Startposition zu dem jeweils von der Routenanfrage umfassten Zielort ermöglicht, und einen Routenvorschlag (7) an den Telebetriebsserver (2) überträgt, wobei der übertragene Routenvorschlag (7) die optimale Telebetriebsroute (31) und eine Mehrzahl von bestimmten Zwischen-Telebetriebsrouten (32) umfasst, die von dem Netzwerkknoten (1) zwischen der von der Routenanfrage (4) umfassten Telebetriebsroute (30) und der bestimmten optimalen Telebetriebsroute (31) bestimmt werden, indem mittels eines Monte-Carlo-Algorithmus erzeugte zufällige Variationen auf die von der Routenanfrage (4) umfasste Telebetriebsroute (30) oder die bestimmte optimale Telebetriebsroute (31) angewendet werden.

2. Verfahren nach Anspruch 1, wobei der Netzwerkknoten (1) eine Routenentscheidung (5), die eine vorgeschlagene Telebetriebsroute (31, 32) umfasst, von dem Telebetriebsserver (2) empfängt, die vorgeschlagene Telebetriebsroute (31, 32) speichert und das zellulare Netzwerk (8) veranlasst, entsprechende spektrale Ressourcen von Funkzellen zu reservieren, die von der vorgeschlagenen Telebetriebsroute (31, 32) durchlaufen werden.

3. Verfahren nach Anspruch 1 oder 2, wobei der Netzwerkknoten (1) die von der Routenanfrage (4) umfasste Telebetriebsroute (30) speichert, das zellulare Netzwerk (8) veranlasst, entsprechende spektrale Ressourcen von Funkzellen zu reservieren, die von der von der Routenanfrage (4) umfassten Telebetriebsroute (30) durchlaufen werden, und eine Routenbestätigung (6) an den Telebetriebsserver (2) überträgt, wenn das zellulare Netzwerk (8) einen sicheren Fernbetrieb des Fahrzeugs (9) entlang der Telebetriebsroute während der Fahrzeit, die jeweils von der Routenanfrage (4) umfasst sind, ermöglicht.

4. Verfahren nach einem der Ansprüche 1 bis 3, wobei das Bestimmen der optimalen Telebetriebsroute (31) das Zuweisen von Gewichtungen zu Straßenabschnitten (33) des Straßennetzes (3) und das Anwenden eines gewichteten Kürzester-Weg-Algorithmus auf das Straßennetz (3) umfasst, wobei der gewichtete Kürzester-Weg-Algorithmus jeweilige Kosten von Routen, die den Zielort mit der Startposition, die jeweils von der Routenanfrage umfasst sind, verbinden, durch Aufsummieren von den Straßenabschnitten (33) der Route zugewiesenen Gewichtungen und/oder durch das Überprüfen der von der Routenanfrage (4) umfassten Telebetriebsroute (30) bewertet, wobei das Überprüfen das Bestimmen einer Telebetriebsroute ohne Berücksichtigung einer Verfügbarkeit drahtloser Verbindungen entlang der Telebetriebsroute und das Vergleichen der bestimmten Telebetriebsroute mit der von der Routenanfrage (4) umfassten Telebetriebsroute (30) umfasst, wobei die Überprüfung erfolgreich ist, wenn die Telebetriebsroute und die von der Routenanfrage (4) umfasste Telebetriebsroute zumindest im Wesentlichen übereinstimmen.

5. Verfahren nach Anspruch 4, wobei die Gewichtungen in Abhängigkeit von Attributen von Knoten und/oder Kanten eines mathematischen Graphen zugewiesen werden, der das Straßennetz (3) darstellt, wobei die Attribute das Straßennetz (3) und das zellulare Netzwerk (8) spezifizieren.

6. Verfahren nach Anspruch 5, wobei die das zellulare Netzwerk (8) spezifizierenden Attribute eine Funkabdeckung entlang eines Straßenabschnitts (33), eine maximale Bitrate entlang eines Straßenabschnitts (33), eine minimal garantierte Bitrate entlang eines Straßenabschnitts (33) und/oder eine maximal garantierte Latenz entlang eines Straßenabschnitts (33) umfassen und/oder wobei die das Straßennetz (3) spezifizierenden Attribute eine Position eines Knotens (34), einen Typ eines Knotens (34), eine Länge einer Straße (33), eine Kategorie einer Straße (33), eine maximale Geschwindigkeit entlang eines Straßenabschnitts (33), eine aktuelle Verkehrssituation entlang eines Straßenabschnitts (33), eine Luftqualität entlang eines Straßenabschnitts (33), eine Anzahl von Fahrspuren eines Straßenabschnitts (33) und/oder eine Richtung einer Straße (33) umfassen.

7. Verfahren nach einem der Ansprüche 5 oder 6, wobei die das zellulare Netzwerk (8) spezifizierenden Attribute durch ein künstliches neuronales Netzwerk (10) und/oder mittels einer Zeitreihe historischer Daten vorhergesagt werden.

8. Verfahren nach einem der Ansprüche 1 bis 7, wobei der Netzwerkknoten (1) für jede bestimmte Telebetriebsroute (31, 32) eine Kennzahl bestimmt und die bestimmte Kennzahl der bestimmten Telebetriebsroute (31, 32) zuordnet, wobei der übertragene Routenvorschlag (7) Folgendes umfasst: die zugeordnete Kennzahl, eine Differenz zwischen einer Fahrzeit entlang der bestimmten Telebetriebsroute (31, 32) und der von der Routenanfrage (4) umfassten Fahrzeit, eine Differenz zwischen einer Routenlänge der bestimmten Telebetriebsroute (31, 32) und einer Routenlänge der von der Routenanfrage (4) umfassten Telebetriebsroute (30), und/oder eine Wahrscheinlichkeit einer ungestörten Fahrt entlang der bestimmten Telebetriebsroute (31, 32), wobei die Wahrscheinlichkeit als die Kennzahl bestimmt wird.

9. Verfahren nach einem der Ansprüche 1 bis 8, wobei eine von dem Telebetriebsserver (2) ausgeführte Telebetriebsanwendung und jedes Fahrzeug (9) der Fahrzeugflotte durch das zellulare Netzwerk (8) veranlasst werden, eine Datenrate automatisch an eine aktuelle Bitrate der drahtlosen Verbindung (80) anzupassen, und/oder wobei der Telebetriebsserver (2) als ein Edge-Server ausgebildet ist.

10. Verfahren nach einem der Ansprüche 1 bis 9, wobei die von der Routenanfrage (4) umfasste Telebetriebsroute (30) von dem Telebetriebsserver (2) bestimmt wird und/oder durch Minimieren einer Länge der Route bestimmt wird.

11. Verfahren nach einem der Ansprüche 1 bis 10, wobei die empfangene Routenanfrage (4) jeweilige Startpositionen, Zielorte, Routen und Fahrzeiten einer Mehrzahl von Fahrzeugen (9) umfasst.

12. System, umfassend einen Telebetriebsserver (2) und einen Netzwerkknoten (1) für ein zellulares Netzwerk (8), wobei das System dazu eingerichtet ist, ein Verfahren nach einem der Ansprüche 1 bis 11 durchzuführen, wobei der Telebetriebsserver (2) eine Fahrzeugflotte auf einem Straßennetz (3) über drahtlose Verbindungen (80), die von dem zellularen Netzwerk (8) bereitgestellt werden, aus der Ferne betreibt.

## Revendications

1. Procédé d'exploitation d'un réseau cellulaire (8), dans lequel
- un serveur de téléopération (2) fait fonctionner à distance une flotte de véhicules dans un réseau routier (3) via des connexions sans fil (80) fournies par un réseau cellulaire (8);
- un nœud de réseau (1) du réseau cellulaire (8) reçoit une demande d'itinéraire (4) provenant du serveur de téléopération (2), la demande d'itinéraire (4) reçue comprenant une position de départ d'un véhicule (9) de la flotte de véhicules, un lieu de destination que le véhicule (9) doit atteindre, un itinéraire de téléopération (30) reliant le lieu de destination à la position de départ et un temps de trajet du véhicule (9);
- lorsque le réseau cellulaire (8) ne permet pas une téléopération sécurisée du véhicule (9) le long de l'itinéraire de téléopération (30) pendant le temps de trajet respectivement défini par la demande d'itinéraire (4), le nœud de réseau (1) détermine un itinéraire de téléopération optimal (31) permettant une téléopération sécurisée du véhicule (9) depuis la position de départ jusqu'au lieu de destination, respectivement compris dans la demande d'itinéraire, et transmet une suggestion d'itinéraire (7) au serveur de téléopération (2), la suggestion d'itinéraire (7) transmise comprenant l'itinéraire de téléopération optimal (31) et une pluralité d'itinéraires de téléopération intermédiaires (32) déterminés par le nœud de réseau (1) entre l'itinéraire de téléopération (30) compris dans la demande d'itinéraire (4) et l'itinéraire de téléopération optimal (31) déterminé en appliquant des variations aléatoires générées par un algorithme Monte Carlo à l'itinéraire de téléopération (30) compris dans la demande d'itinéraire (4) ou à l'itinéraire de téléopération optimal (31) déterminé.

2. Procédé selon la revendication 1, dans lequel le nœud de réseau (1) reçoit une décision d'itinéraire (5) provenant du serveur de téléopération (2), ladite décision d'itinéraire (5) comprenant un itinéraire de téléopération (31, 32) suggéré, stocke l'itinéraire de téléopération (31, 32) suggéré et fait en sorte que le réseau cellulaire (8) réserve les ressources spectrales correspondantes des cellules radio traversées par l'itinéraire de téléopération (31, 32) suggéré.

3. Procédé selon la revendication 1 ou 2, dans lequel le nœud de réseau (1) stocke l'itinéraire de téléopération (30) compris dans la demande d'itinéraire (4), fait en sorte que le réseau cellulaire (8) réserve les ressources spectrales correspondantes des cellules radio traversées par l'itinéraire de téléopération (30) compris dans la demande d'itinéraire (4) et transmet une confirmation d'itinéraire (6) au serveur de téléopération (2) lorsque le réseau cellulaire (8) permet une téléopération sécurisée du véhicule (9) le long de l'itinéraire de téléopération pendant le temps de trajet respectivement compris dans la demande d'itinéraire (4).

4. Procédé selon l'une des revendications 1 à 3, dans lequel la détermination de l'itinéraire de téléopération optimal (31) comprend l'attribution de pondérations à des tronçons de route (33) du réseau routier (3) et l'application d'un algorithme de trajet pondéré le plus court au réseau routier (3), l'algorithme de trajet pondéré le plus court évaluant les coûts respectifs des itinéraires reliant le lieu de destination à la position de départ, tels qu'ils sont respectivement compris dans la demande d'itinéraire, en additionnant les pondérations attribuées aux tronçons de route (33) de l'itinéraire et/ou en vérifiant l'itinéraire de téléopération (30) compris dans la demande d'itinéraire (4), la vérification comprenant une étape consistant à déterminer un itinéraire de téléopération sans tenir compte de la disponibilité des connexions sans fil le long de cet itinéraire, puis à comparer l'itinéraire de téléopération ainsi déterminé à l'itinéraire de téléopération (30) compris dans la demande d'itinéraire (4), la vérification étant réussie lorsque l'itinéraire de téléopération et l'itinéraire de téléopération compris dans la demande d'itinéraire (4) coïncident au moins substantiellement.

5. Procédé selon la revendication 4, dans lequel les pondérations sont attribuées en fonction des attributs des nœuds et/ou des arêtes d'un graphe mathématique représentant le réseau routier (3), lesdits attributs caractérisant le réseau routier (3) et le réseau cellulaire (8).

6. Procédé selon la revendication 5, dans lequel les attributs caractérisant le réseau cellulaire (8) comprennent une couverture radio le long d'un tronçon de route (33), un débit binaire maximal le long d'un tronçon de route (33), un débit binaire minimal garanti le long d'un tronçon de route (33) et/ou une latence maximale garantie le long d'un tronçon de route (33) et/ou dans lequel les attributs caractérisant le réseau routier (3) comprennent l'emplacement d'un nœud (34), un type de nœud (34), une longueur d'une route (33), une catégorie de route (33), une vitesse maximale sur un tronçon de route (33), une situation de circulation actuelle sur un tronçon de route (33), une qualité de l'air sur un tronçon de route (33), un nombre de voies d'un tronçon de route (33), une direction d'une route (33).

7. Procédé selon l'une des revendications 5 ou 6, dans lequel les attributs caractérisant le réseau cellulaire (8) sont prédits par un réseau neuronal artificiel (10) et/ou à l'aide d'une série chronologique de données historiques.

8. Procédé selon l'une des revendications 1 à 7, dans lequel le nœud de réseau (1) détermine un indicateur clé pour chaque itinéraire de téléopération (31, 32) déterminé et attribue l'indicateur clé déterminé à l'itinéraire de téléopération (31, 32) déterminé, la suggestion d'itinéraire (7) transmise comprenant l'indicateur attribué, une différence entre le temps de trajet le long de l'itinéraire de téléopération (31, 32) déterminé et le temps de trajet compris dans la demande d'itinéraire (4), une différence entre la longueur de l'itinéraire de téléopération (31, 32) déterminé et la longueur de l'itinéraire de téléopération (30) compris dans la demande d'itinéraire (4) et/ou une probabilité de trajet non perturbé le long de l'itinéraire de téléopération (31, 32) déterminé, cette probabilité étant déterminée comme l'indicateur clé.

9. Procédé selon l'une des revendications 1 à 8, dans lequel une application de téléopération exécutée par le serveur de téléopération (2) et chaque véhicule (9) de la flotte de véhicules est amenée, par le réseau cellulaire (8), à adapter automatiquement un débit de données au débit binaire actuel de la connexion sans fil (80) et/ou le serveur de téléopération (2) est configuré comme un serveur périphérique.

10. Procédé selon l'une des revendications 1 à 9, dans lequel l'itinéraire de téléopération (30) compris dans la demande d'itinéraire (4) est déterminé par le serveur de téléopération (2) et/ou en minimisant la longueur de l'itinéraire.

11. Procédé selon l'une des revendications 1 à 10, dans lequel la demande d'itinéraire reçue (4) comprend respectivement les positions de départ, les lieux de destination, les itinéraires et les temps de trajet d'une pluralité de véhicules (9).

12. Système comprenant un serveur de téléopération (2) et un nœud de réseau (1) pour un réseau cellulaire (8), configuré pour mettre en œuvre un procédé selon l'une des revendications 1 à 11, le serveur de téléopération (2) faisant fonctionner à distance une flotte de véhicules dans un réseau routier (3) via des connexions sans fil (80) fournies par le réseau cellulaire (8).
